# EUROPEAN PATENT APPLICATION

(11) **EP 1 840 776 A1**
(43) Date of publication of application: **03.10.2007**
(21) Application number: 07006282.3
(22) Date of filing: 27.03.2007
(51) Int. Cl.: G06F 17/50

(54) **Simulation system and simulation method**

(30) Priority: 28.03.2006 JP 2006087165
(71) Applicant: MURATA KIKAI KABUSHIKI KAISHA, Kyoto 6018326 (JP)
(72) Inventor: Ito, Tomio c/o Murata Kikai K.K., Inuyama-shi Aichi 484-8502 (JP); Kobayashi, Toyokazu c/o Murata Kikai K.K., Inuyama-shi Aichi 484-8502 (JP)
(74) Representative: Wagner, Karl H.

(57) **Abstract**

Transportation commands are assigned to models, and executed in a transportation command generation process. Execution results are recorded in a log file. During execution, transportation results are transmitted, and stored in a database on a receiver side. The data of the database is processed into statistical data, and displayed as graphs on a monitor.

## Description

### Technical Field

The present invention relates to a simulation system and a simulation method. In particular, the present invention relates to a system and a method in which, during execution of simulation, it is possible to display results of simulation as statistical data.

### Background Art

In automated warehouses, picking systems, and transportation systems in clean rooms, techniques of carrying out simulation to verify the capability of the equipment and system in advance, and to seek the more efficient mode of operation are known. For example, Japanese Laid-Open Patent Publication No. 9-231198 discloses simulation for a distribution system. In these simulation techniques, how a given command is executed is simulated, and the simulation condition is displayed, e.g., using an image showing a transportation apparatus that executes the transportation command. Execution results are stored in a log file, and the simulation results are not subjected to post-processing (secondary processing).

Determination as to whether the number of finished transportations satisfies the requirement or not may be made immediately by displaying simulation results as statistical data. However, in fact, such determination cannot be made until simulation is finished completely. Further, when transportation is delayed, without carefully looking at the simulation screen, it is not possible to determine whether the delay occurred due to uneven arrangement of loading or unloading ports, or due to some other factors.

### Summary of the Invention

An object of the present invention is to make it possible to execute simulation in a manner that, during execution of simulation, graphs of statistical data showing execution results are displayed on a monitor.
Another object of the present invention is to make it possible to easily verify whether a transportation system as a target of simulation has the transportation capability as the required basic performance without waiting for completion of simulation.
Still another object of the present invention is to make it possible to verify the detailed performance of a transportation system as a target of simulation.

A simulation system according to the present invention comprises simulation means for executing computer simulation, statistical data generating means for generating statistical data by statistically processing execution results of simulation during execution of simulation, and means for processing the determined statistical data into graphs, and displaying the graphs on a monitor.
A simulation method according to the present invention comprises the steps of executing simulation by a computer, statistically processing execution results of simulation to generate statistical data during execution of the simulation, and processing the statistical data into graphs, and displaying the graphs on a monitor.

Preferably, the simulation means simulates executing conditions of a virtual transportation system, and as the statistical data, the statistical data generating means at least determines a proportion of a number of finished transportations to a number of required transportations in the transportation system.

Further, preferably, the simulation means simulates executing conditions of a virtual transportation system, and the simulation system further comprises means for storing the execution results of simulation, and spreadsheet calculation means for processing the execution results and outputting the processed execution results.

### Advantages of the Invention

In the present invention, simulation means executes computer simulation. During execution, statistical data generating means processes execution results into statistical data, and displays the statistical data on the monitor. Thus, the main results obtained in simulation can be confirmed on the monitor without waiting for completion of simulation. For example, it is possible to promptly recognize the necessity of correcting inappropriate simulation conditions, or the necessity of enhancing the capability when the simulation target does not meet the basic required performance. Further, since it is not necessary to continuously view the operation or state of the simulation target, improvement in the operating environment is achieved.

If the statistical data generating means determines the proportion of the number of finished transportations to the number of required transportations in the transportation system, it is possible to recognize how many transportations as the basic required performance can be processed by the transportation system as the simulation target. Therefore, it is possible to promptly verify whether the layout, the capability, or the like of the transportation system are appropriate or not.

If the simulation results in the transportation system are stored, and the execution results are processed (summarized) by spreadsheet calculation means, and the processed execution results are outputted in forms or the like, the performance of the transportation system as the simulation target can be verified in detail. Further, it is not necessary to manually process the simulation results into suitable data.

### Brief Description of the Drawings

FIG. 1 is a block diagram showing a simulation system according to an embodiment.
FIG. 2 is a block diagram showing a simulation program according to the embodiment.
FIG. 3 is a block diagram showing a post-processing program according to the embodiment.
FIG. 4 is a chart showing processes in simulation according to the embodiment.
FIG. 5 is a plan view showing an automated warehouse system as a target of simulation.
FIG. 6 is a view schematically showing a screen displaying an operating state of a stacker crane as graphs during execution of simulation according to the embodiment.
FIG. 7 is a table schematically showing a form outputted in the embodiment.

### Description of Reference Numerals

- 2: simulation system
- 4: simulation apparatus
- 6: post-processing apparatus
- 7: user input
- 8: command generation unit
- 10: model operation unit
- 12: environment variable memory unit
- 14, 32: log file
- 16: communication unit
- 18, 28: monitor
- 20: reception unit
- 22: database
- 24: statistical data generation unit
- 26: spreadsheet calculation unit
- 30: monitor
- 40: simulation program
- 41: transportation command generation order
- 42: model operation order
- 43: environment variable updating order
- 44: log file creation order
- 45: communication order
- 46: current data communication order
- 47: log file communication order
- 50: post-processing program
- 51: reception order
- 52: current data reception order
- 53: log file reception order
- 54: database creation order
- 55: statistical data generation order
- 56: graph display order
- 57: spreadsheet calculation order
- 61: transportation command generation process
- 62: model operation process
- 63: environment variable updating process
- 64: log file creation process
- 66: current data communication process
- 67: log file communication process
- 72: current data reception process
- 73: log file reception process
- 74: database creation process
- 75: statistical data generation process
- 76: graph display process
- 77: spreadsheet calculation process
- 78: form output process
- 80: automated warehouse system
- 81 to 83: automated warehouse unit
- 84: rack
- 85: stacker crane
- 86: storage/retrieval station
- 88: rail vehicle
- 90: storage/retrieval conveyor
- 100: graph display screen
- 110: form

### EMBODIMENT

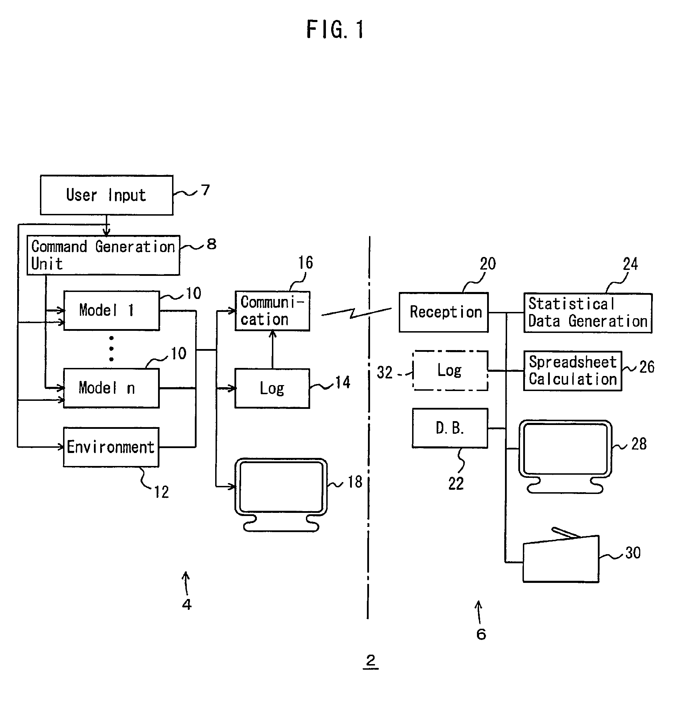

FIGS. 1 to 7 shows a simulation system 2 according to an embodiment. A reference numeral 4 denotes a simulation apparatus, and structure of the apparatus itself is known. A reference numeral 6 denotes a post-processing apparatus having distinctive features of the embodiment. Data obtained during execution of simulation in the simulation apparatus 4 is processed into statistical data, and the statistical data is outputted on certain forms (formats) or the like after spreadsheet calculation. The post-processing herein is not related to the temporal order, and means secondary processing.

The simulation apparatus 4 has a user input 7, and models of transportation systems, distribution systems, semiconductor processing systems, liquid crystal display processing systems, or the like as targets of simulation are inputted to the user input 7. Further, data as targets of simulation such as performance that needs to be satisfied by the transportation system or distribution conditions that need to be satisfied by the distribution system are inputted to the user input 7. In the case of the semiconductor system or the liquid crystal display processing system, production requirements or the like are inputted. In simulation, the models carry out operations or processes by themselves. In the case of FIG. 1, there are n models. Things that are affected by the models, and interact with the models are environments. The environments are defined by environment variables, and the environment variables are stored in an environment variable memory 12. A command generation unit 8 generates a command for operating a model in response to a request to the system as the target of simulation inputted to the user input 7. Operation of the model is displayed on a monitor 18, and outputted from a communication unit 16. Further, operation results of the model are stored in a log file 14.

The above explanation will be summarized as follows. By the user input 7, models as targets of simulation are established. The models are loaded on a computer as model operation units 10 and the environment variable memory 12. The requirement to the system as the target of simulation is inputted from the user input 7 to the command generation unit 8, and converted into individual transportation requests. Then, the model operation units 10 operate the individual models, and update environment variables based on operation of models. Operation results of the individual models are stored in the log file 14, displayed on the monitor 18, and outputted from the communication unit 16.

Although the post-processing apparatus 6 is shown as an apparatus that is separate from the simulation apparatus 4, the post-processing apparatus 6 may be integral with the simulation apparatus 4. Further, the process on the side of the post-processing apparatus 6 may be carried out on the side of the simulation apparatus 4. A receiver unit 20 receives individual results of simulation that is currently executed such as execution results of individual transportation commands, transmitted from the communication unit 16, and stores these items of data in a database 22. Further, the receiver unit 20 receives the log file 14 from the communication unit 16. A statistical data generation unit 24 calculates statistic data (statistics) of the simulation results regarding simulation that is currently executed, using the data in the database 22. For example, the statistic data comprises the average, the dispersion, the standard deviation or the like. In the case of the transportation system, the statistic data comprises the number of cases of finished transportations, the time required for one transportation, the wait period from the time when an article arrives at the transportation system to the time when the process in the transportation system is performed, and the proportion of the finished transportation commands to the required transportation commands, or the like. The statistical data generation unit 24 processes the obtained statistical data into graphs, and outputs the graphs on the monitor 28. As a result, at the time of executing simulation, it is possible to view main results displayed as graphs in real time. A spreadsheet calculation unit 26 carries out spreadsheet calculation of the simulation data using the log file received by the receiver unit 20 or a log file 32 storing the individual simulation results received by the receiver unit 20 on the side of the post-processing apparatus 6, and outputs form data, for example. The obtained forms are displayed on the monitor 28. Then, the forms are printed by a printer 30, and transmitted from a suitable terminal. The forms printed by the printer 30 and transmitted by the terminal can be used as a report of simulation results. Therefore, it is not necessary to manually create any report from the log file 14.

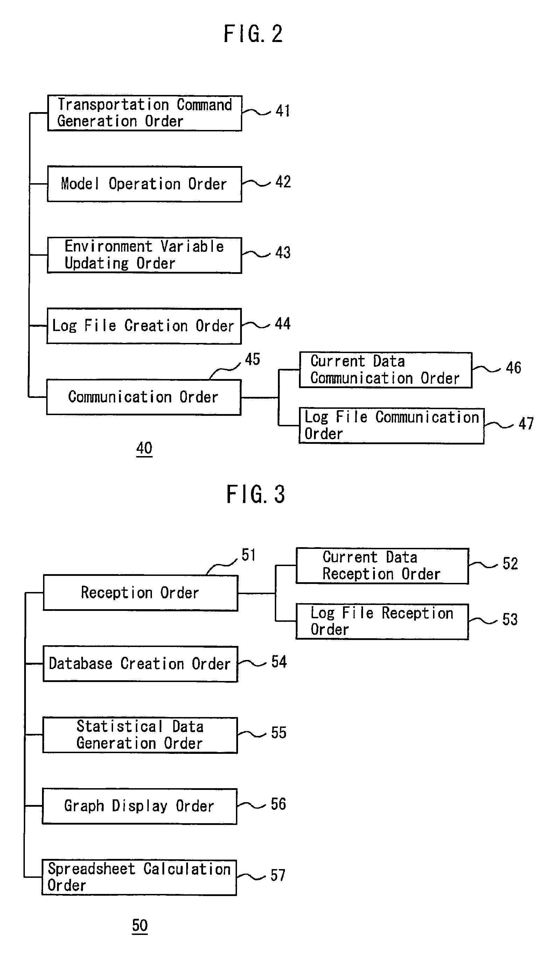

FIG. 2 shows a simulation program 40. The simulation program 40 corresponds to the simulation apparatus 4 in FIG. 1. From the description after FIG. 2, although simulation of the transportation system is taken as an example, simulation of the distribution system such as a picking center or a distribution center can be performed in the same manner, and simulation of the semiconductor processing system and the liquid crystal display processing system can be carried out in the same manner. A transportation command generation order 41 operates models such as stacker cranes, rail vehicles, automated transportation vehicles, overhead traveling vehicles, and transfer apparatuses. An environment variable updating order 43 updates environment variables based on operation of the models. For example, in the case of an automated warehouse, inventory data of racks is one of the environment variables, and the inventory data is updated when an article is transferred to/from a transportation apparatus such as a stacker crane. In the case of the automated warehouse, environment variables such as the number of articles to be stored in the warehouse and the number of articles to be retrieved from the warehouse are updated based on operation of the transportation apparatus. A log file creation order 44 stores operation results of the models such as the transportation apparatus and update condition of the environment variables in the log file. A communication order 45 includes a current data communication order 46 and a log file communication order 47. The current data communication order 46 transmits the operation results of the models, or the operation results of the models and the update condition of the environment variables to the post-processing apparatus in real time.

In a post-processing program 50, a reception order 51 includes a current data reception order 52 and a log file reception order 53. During execution of simulation, the current data reception order 52 receives the operation results of the models, or the operation results of the models and the update condition of the environment variables. The log file reception order 53 receives a log file for all of one simulation after the simulation is finished. The log file may be created on the receiver side. A database creation order 54 creates a database based on the individual simulation results obtained from the current data reception order 52. A statistical data generation order 55 outputs the required statistical data using data in the database. A graph display order 56 converts the obtained statistical data into graphs, and display the graphs on the monitor. A spreadsheet calculation order 57 processes the log file, executes spreadsheet calculation, and outputs the data of forms to the monitor, the printer, external terminals, or the like.

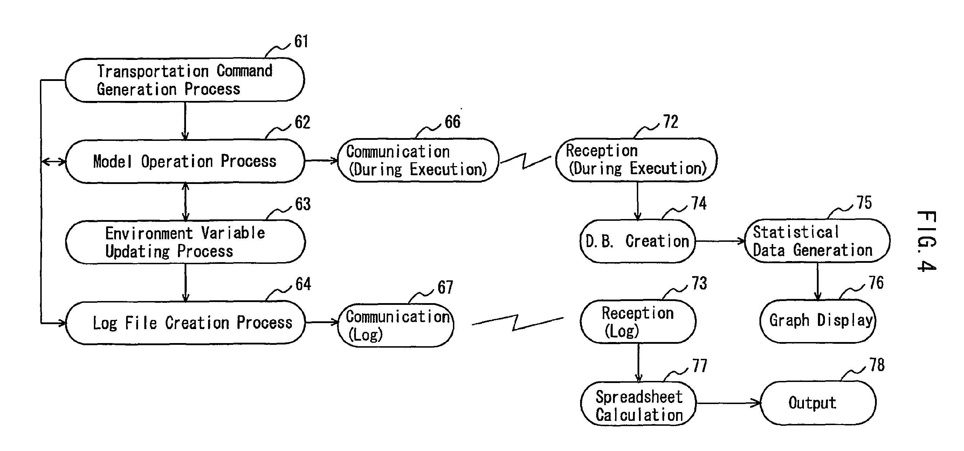

FIG. 4 shows main processes in simulation of the transportation system. A transportation command generation process 61 generates a transportation command, and inputs the transportation command to a model operation process 62. Based on the inputted transportation command, the model operation process 62 operates the models. An environment variable updating process 63 updates environment variables based on operation of the models. A log file creation process 64 stores operation results of models and updates of environment variables in the log file. When the models are operated in the model operation process 62, during execution of simulation, a current data communication process 66 carries out data communication of the model operation results or the model operation results and update condition of the environment variables. A log file communication process 67 outputs the log file after completion of simulation, for example.

During execution of simulation, a current data reception process 72 receives operation results of models and update condition of environment variables, and a database creation process 74 creates a database based on the data. A statistical data generation process 75 generates statistical data using the data in the database. A graph display process 76 displays graphs on the monitor. For example, after completion of simulation, the graph display process 76 receives the log file. The log file is processed in a spreadsheet calculation process 77, and the resulting data is outputted to the printer, the monitor, external terminals or the like. The log file may be created using the data from the current data reception process 72. Alternatively, forms or the like may be created by spreadsheet calculation or the like using data from the database creation process 74.

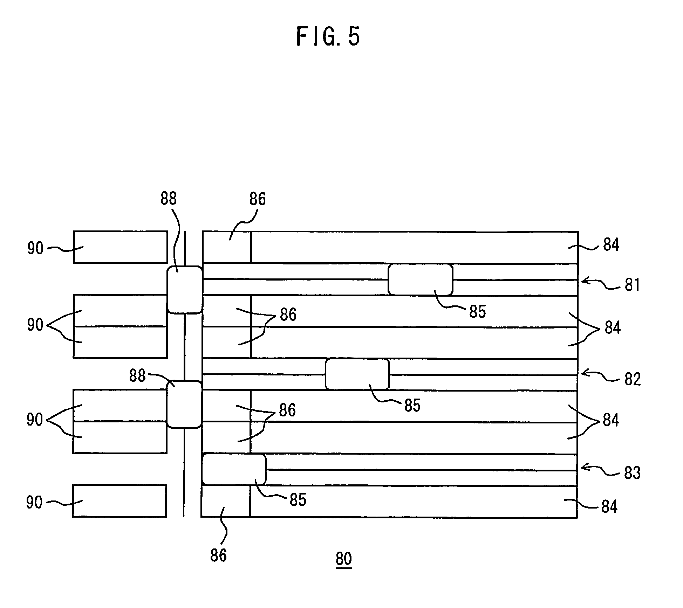

FIG. 5 shows an automated warehouse system 80 as a target of simulation. Reference numerals 81 to 83 denote individual automated warehouse units. Reference numerals 84 denote racks and reference numerals 85 denote stacker cranes as an example of the transportation apparatus. Reference numerals 86 denote storage/retrieval stations, and reference numerals 88 denote rail vehicles. The rail vehicles 88 transport articles between storage/retrieval conveyers 90 and the storage/retrieval stations 86.

An object of simulation is to verify whether the automated warehouse system 80 in FIG. 5 as a model satisfies the required specification such as the number of storages, the number of retrievals per one day, and the number of retrievals for picking. The transportation speed of the stacker crane 85, the transportation speed of the rail vehicle 88 are data as the basis of simulation. Then, on the basis of the required specification such as the number of storages and the number of retrievals, virtual transportation commands such as a storage command and a retrieval command are generated. These commands are executed by transportation apparatuses such as the trail vehicle 88, the stacker crane 85, the storage/retrieval conveyer 90, the storage/retrieval station 86, or the like, and the processing conditions are simulated. During the periods of the processes, operating conditions of the stacker crane 85, the storage/retrieval station 86, the rail vehicle 88, the storage/retrieval conveyor 90 are displayed as models on the monitor.

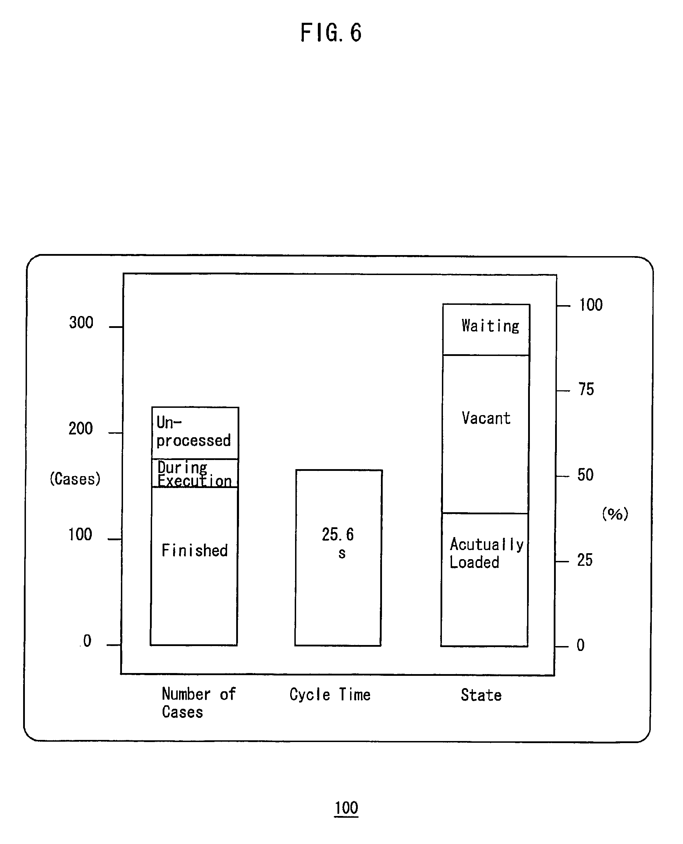

In parallel with execution of simulation, statistical data of the simulation results is displayed on the monitor. For example, in the case of a graph display screen 100 shown in FIG. 6, a left bar graph shows the proportion of finished commands, currently executed commands, unexecuted commands, relative to all of the generated transportation commands. Further, cycle time shows the average cycle time for the stacker crane from the start of simulation to the current time. If necessary, distribution of the cycle time may be displayed additionally. The cycle time herein means the time from the start to the end of transportation command. A bar graph on the right side of FIG. 6 shows distribution of states of the respective stacker cranes. The proportion of a period from the time when the stacker crane loads an article to start traveling to the time when the stacker crane unloads the article is shown as "ACTUALLY LOADED", and the proportion of a period from the time when a vacant stacker crane starts traveling to the time when an article is loaded on the stacker crane is shown as "VACANT", and the proportion of a period in which the stacker crane is waiting is shown as "WAITING". Additionally, the graph display screen 100 shows the wait period until the articles are stored in the warehouse, and its standard deviation, the wait period until the article is retrieved from the warehouse and its standard deviation, and the average number of articles on the storage/retrieval conveyor 90 and its standard deviation. Further, if any overcapacity condition such as overflow of articles on the storage/retrieval conveyor 90 occurs, an alarm is displayed on the graph display screen 100.

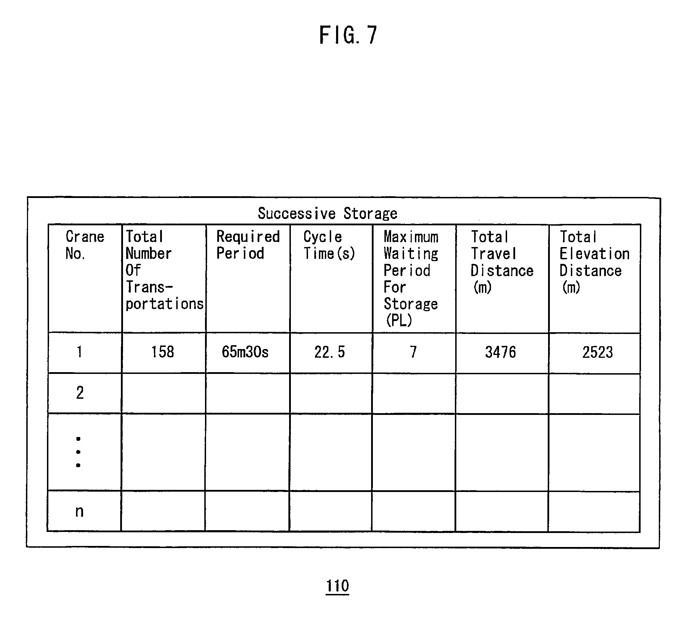

A form 110 in FIG. 7 shows data outputted by processing data in the log file by spreadsheet calculation after completion of simulation. In the case of FIG. 7, for n cranes in a successive storage mode, the number of transported articles, the total period of time required for transportation, the cycle time for one transportation, the maximum number of pallets waiting to be stored in the warehouse, the total traveling distance and the total elevation distance are described. The form 110 in FIG. 7 is an example of a system only including one automated warehouse unit. In the case of a system including a plurality of automated warehouse units and storage/retrieval conveyors, the time average of the number of pallets waiting on the storage/retrieval conveyors is outputted.

In the embodiment, the following advantages can be obtained.
(1) It is possible to view main data displayed as graphs on a monitor. Therefore, if there is any error in the data input, it is possible to immediately recognize the error from the graphs, and execute simulation again. If it is clear that the transportation system as the simulation target does not satisfy the required performance, the inappropriate capability of the transportation system can be detected promptly.
(2) The operator can recognize results of simulation without continuously looking at operation of the transportation apparatus such as a stacker crane on the monitor. Therefore, improvement in the operating environment is achieved.
(3) It is possible to execute simulation, and output data of graphs and forms on the monitor at different locations. Therefore, it is possible to hear the required performance from persons involved at a location where the transportation system is installed, and monitor the display of graphs showing the simulation results at a remote location.
(4) By outputting data on forms, it is possible to confirm the details of the simulation results. Using the forms, it is possible to omit the laborious operation of manually generating a report of the simulation results.

Although the embodiment has been described in connection with the case of simulation in the transportation system as an example, the present invention is applicable to simulation in other distribution systems or production factories. Further, in the specification, description about the simulation system is directly applicable to the simulation method and the simulation program. Likewise, description about the simulation method is directly applicable to the simulation apparatus and the simulation program, and description about the simulation program is directly applicable to the simulation apparatus and the simulation method.

## Claims

1. A simulation system comprising:
simulation means for executing computer simulation;
statistical data generating means for generating statistical data by statistically processing execution results of simulation during execution of simulation; and
means for processing the statistical data into graphs, and displaying the graphs on a monitor.

2. The simulation system according to claim 1, wherein the simulation means simulates executing conditions of a virtual transportation system; and
as the statistical data, the statistical data generating means at least determines a proportion of a number of finished transportations to a number of required transportations in the transportation system.

3. The simulation system according to claim 1, wherein the simulation means simulates executing conditions of a virtual transportation system, the simulation system further comprising:
means for storing the execution results of simulation; and
spreadsheet calculation means for processing the execution results and outputting the processed execution results.

4. A simulation method comprising steps of:
executing simulation by a computer;
statistically processing execution results of simulation to generate statistical data during execution of the simulation; and
processing the statistical data into graphs, and displaying the graphs on a monitor.
